# FASCICULE DE BREVET EUROPEEN

(11) **EP 4 165 287 B1**
(45) Date de publication et mention de la délivrance du brevet: **21.08.2024**
(21) Numéro de dépôt: 21734198.1
(22) Date de dépôt: 26.05.2021
(51) Int. Cl.: F01D 25/32, F01D 25/12

(54) **DISPOSITIF DE FILTRATION D'UN AIR DE REFROIDISSEMENT D'UNE TURBINE DE TURBOMACHINE**
VORRICHTUNG ZUM FILTERN VON KÜHLLUFT EINER TURBOMASCHINENTURBINE
DEVICE FOR FILTERING COOLING AIR OF A TURBOMACHINE TURBINE

(30) Priorité: 16.06.2020 FR 2006237
(43) Date de publication de la demande: 19.04.2023
(73) Titulaire: SAFRAN AIRCRAFT ENGINES, 75015 Paris (FR)
(72) Inventeur: AMARA, Hassane, 77550 MOISSY-CRAMAYEL (FR); GREUET, Damien, 77550 MOISSY-CRAMAYEL (FR); PAPAIL, Jean Michel Anthime, 77550 MOISSY-CRAMAYEL (FR)
(74) Mandataire: Cabinet Camus Lebkiri
(86) Numéro de dépôt international: PCT/FR2021/050950
(87) Numéro de publication internationale: WO 2021/255360

(56) Documents cités:
- WO-A1-2018/128790
- US-A- 4 383 917
- US-A1- 2011 067 409
- US-A1- 2018 229 167

## Description

### DOMAINE TECHNIQUE DE L'INVENTION

Le domaine de l'invention concerne le refroidissement et la ventilation d'une turbine qui équipe une turbomachine, et plus particulièrement une turbine basse pression.

L'invention concerne plus particulièrement un dispositif de filtration permettant de filtrer un flux d'air de refroidissement d'une turbine basse pression de turbomachine.

### ARRIERE PLAN TECHNIQUE

Dans la présente demande, les termes « amont » et « aval » sont définis par rapport au sens d'écoulement normal du gaz (de l'amont vers l'aval) à travers une turbomachine.

On appelle également « axe de la turbomachine » ou « axe moteur », l'axe de rotation d'un rotor de la turbomachine. La direction axiale correspond à la direction de l'axe de la turbomachine et une direction radiale est une direction perpendiculaire à l'axe de la turbomachine et coupant cet axe. De même, un plan axial est un plan contenant l'axe de la turbomachine, et un plan radial est un plan perpendiculaire à cet axe.

Sauf précision contraire, les adjectifs « intérieur », « interne », « extérieur », « externe » sont utilisés dans la présente demande en référence à une direction radiale de sorte que la partie intérieure d'un élément est, suivant une direction radiale, plus proche de l'axe de la turbomachine que la partie extérieure du même élément.

De façon classique, une turbomachine comporte d'amont en aval, c'est-à-dire dans le sens d'écoulement des flux de gaz, une soufflante, un ou plusieurs compresseurs, une chambre de combustion, une ou plusieurs turbines, et une tuyère d'éjection des gaz de combustion sortant de la ou des turbines.

Ainsi, une turbomachine comprend au moins une partie dédiée à la compression de l'air qu'elle admet en entrée. L'air comprimé par le ou les compresseurs pénètre dans la chambre de combustion où il est mélangé à un carburant avant que le mélange résultant ne soit brûlé et produise des gaz de combustion chauds. Ces derniers sont ensuite détendus dans un étage haute pression de la turbine, puis dans au moins un étage basse pression de cette même turbine.

Ainsi, durant le fonctionnement de la turbomachine, les différents étages de turbine basse pression sont traversés par des gaz de combustion dont la température est très élevée.

Classiquement, une turbine basse pression, ou haute pression, comporte un ou plusieurs étages, chaque étage étant formé par une série d'aubes fixes, formant un ensemble appelé distributeur, suivi d'une roue de turbine comportant un disque rotor sur lequel des aubes, dites mobiles, sont solidarisées dans des alvéoles. Le distributeur dévie le flux de gaz vers les aubes mobiles de la roue avec un angle et une vitesse appropriés afin d'entrainer en rotation les aubes mobiles et l'ensemble rotor de la turbine.

Les alvéoles des disques rotor qui reçoivent les pieds des aubes mobiles sont directement exposés aux gaz de combustion, il est donc nécessaire de les refroidir pour éviter tout endommagement des disques.

Afin de réduire la contrainte de température et d'assurer une durée de vie suffisante des parties de couplages des aubes (pieds d'aube) et des disques (alvéoles), il est connu de les refroidir au moyen d'un air de refroidissement.

Pour cela, il est connu de prélever une partie de l'air qui s'écoule en dehors de la veine d'écoulement de la turbine basse pression, généralement en amont au niveau d'un compartiment de compresseur haute pression, et d'acheminer cet air de refroidissement, via une conduite d'alimentation, appelé tube de servitude, jusqu'à des injecteurs ménagés au niveau d'un carter inter turbines, (ou TCF « Turbine Center Frame » selon la terminologie anglo-saxonne généralement utilisée). L'air de refroidissement est ainsi injecté dans une cavité inter-disques et distribué via différentes lunules et orifices traversants jusqu'aux alvéoles des différents disques du rotor.

L'air prélevé au niveau du compartiment compresseur haute pression d'une turbomachine peut contenir des résidus, des particules, comme par exemple des particules de sable. En fonctionnement, ces particules finissent par être acheminées dans la partie rotor de la turbine basse pression et notamment dans la cavité inter-disque où elles s'accumulent notamment sous les viroles des brides annulaires des disques mobiles de la turbine.

Cette accumulation de particules forme une couche relativement importante, notamment au niveau des faces radialement interne des viroles de bride annulaire, et a pour conséquence d'accroître la masse des disques et donc de la masse centrifugée de la turbomachine, engendrant par conséquent une augmentation des sollicitations mécaniques des différentes pièces tournantes et une diminution de la durée de vue de ces pièces.

Une deuxième conséquence de cette accumulation de particules est une diminution de l'efficacité du refroidissement par convection des différentes pièces tournantes, et notamment des disques, les particules accumulées faisant office de barrière thermique. Le document US 2011/067409 divulgue un séparateur de particules centrifuge est prévu pour éliminer les particules telles que les saletés microscopiques ou les particules de poussière de l'air de refroidissement comprimé avant d'atteindre et de refroidir les aubes de turbine ou les aubes de turbine d'un moteur à turbine.

Ainsi, l'invention vise à remédier aux inconvénients précités et propose un dispositif de filtration permettant de purifier encore mieux un flux d'air de refroidissement
prélevé au niveau d'un compresseur de turbomachine par séparation des particules solides, comme du sable, contenu dans le flux d'air prélevé.

### RESUME DE L'INVENTION

Un but de l'invention est de proposer une solution technique permettant de séparer les particules solides, comme du sable, contenu dans le flux d'air prélevé sans freiner considérablement le flux d'air. La solution de l'invention cherche donc à proposer un dispositif de filtration minimisant la perte de charge de manière à garder un refroidissement efficace du rotor de turbine basse pression en aval.

A cette fin, l'invention a pour objet un dispositif de filtration d'un flux d'air de refroidissement pour le refroidissement d'une turbine basse pression d'une turbomachine, caractérisé en ce qu'il comporte un conduit présentant une géométrie configurée pour mettre en centrifugation ledit flux d'air de refroidissement traversant ledit conduit, ledit conduit présentant des ouvertures dimensionnées pour permettre une séparation des particules solides contenues dans ledit flux d'air de refroidissement mis en centrifugation, ledit conduit présente une forme d'hélice circulaire inscrite sur un cylindre de révolution d'axe de révolution.

Grâce au dispositif selon l'invention, on réalise une séparation des particules solides contenues dans le flux de refroidissement tout en minimisant les pertes de charge, ce qui permet de garder une vitesse du flux d'air sortant du dispositif de filtration sensiblement identique à la vitesse du flux d'air entrant. Ainsi, la qualité de refroidissement du rotor de la turbine basse pression est conservée.

Avantageusement, le conduit présente une forme d'hélice circulaire inscrite sur un cylindre de révolution d'axe de révolution. Ainsi, la forme de conduit permet avec un élément statique de mettre en centrifugation le flux d'air de refroidissement le traversant.

Avantageusement, le conduit est un tube à section circulaire. Ainsi, on minimise davantage les pertes de charge.

Avantageusement, les ouvertures sont ménagées dans une portion radialement externe dudit conduit par rapport au dit axe de révolution. Ainsi, les ouvertures sont réalisées dans une portion du conduit dans laquelle les particules solides sont dirigées par effet centrifuge.

Avantageusement, le dispositif de filtration comporte un réservoir de stockage pour le stockage des particules solides séparées dudit flux d'air de refroidissement. Ainsi, les particules solides séparées du flux d'air ne sont pas relâchées dans la turbomachine.

Avantageusement, le réservoir de stockage présente une enveloppe poreuse à l'air. Ainsi, il n'y a pas de surpression à l'intérieur du réservoir de stockage.

Avantageusement, le dispositif de filtration comporte une enceinte protectrice formant l'enveloppe extérieure dudit dispositif de filtration. Ainsi, le dispositif de filtration est protégé des chocs et des agressions extérieures.

Avantageusement, l'enceinte protectrice présente des ouvertures permettant de mettre en communication fluidique l'intérieur de l'enceinte protectrice avec l'extérieur de l'enceinte protectrice. Ainsi, on garantit une pression à l'intérieur de l'enceinte protectrice inférieure à la pression à l'intérieur du conduit ce qui facilite l'expulsion des particules solides du conduit via les ouvertures du conduit.

Avantageusement, l'enceinte protectrice présente une trappe d'accès positionnée en regard d'une ouverture ménagée au niveau de l'enveloppe extérieure du réservoir de stockage. Ainsi, on garantit une protection de l'intérieur du dispositif de filtration tout en permettant des opérations de nettoyage facilitées.

L'invention a aussi pour objet un système de refroidissement d'une turbine basse pression comportant un tube de servitude permettant d'acheminer un flux d'air de refroidissement prélevé au niveau d'un compartiment de compresseur haute pression jusqu'à un compartiment de turbine basse pression, ledit tube de servitude comportant un dispositif de filtration, ledit dispositif de filtration étant positionné entre un tube amont relié au compartiment de compresseur haute pression et un tube aval relié au compartiment de turbine basse pression.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention.

La figure 1 est une vue schématique en perspective d'un tube de servitude d'acheminement d'un air de refroidissement prélevé au niveau d'un module compresseur haute pression intégrant un dispositif de filtration selon l'invention.

La figure 2 illustre plus particulièrement un exemple de réalisation d'un dispositif de filtration selon l'invention, en coupe axiale partielle selon l'axe longitudinal du dispositif.

La figure 3 illustre plus particulièrement une tranche transversale du tube spirale du dispositif de filtration selon l'invention.

La figure 4 est un schéma de principe illustrant le fonctionnement du dispositif de filtration selon l'invention.

La figure 5 une vue extérieure du dispositif de filtration illustré à la figure 2.

La figure 6 une vue en coupe partielle selon un plan longitudinal du dispositif de filtration illustré à la figure 2, la coupe étant réalisée entre l'enveloppe protectrice extérieure et le réservoir de stockage à l'intérieur du dispositif de filtration illustré à la figure 2.

Sauf précision contraire, un même élément apparaissant sur des figures différentes présente une référence unique.

### DESCRIPTION DETAILLEE

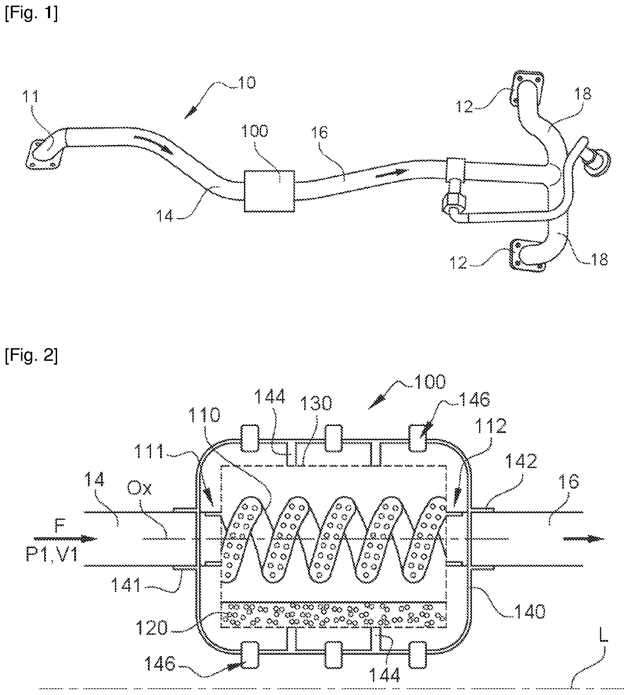

La [fig 1] est une vue schématique en perspective d'un tube de servitude 10 d'acheminement d'un air de refroidissement prélevé au niveau d'un module compresseur haute pression, intégrant un dispositif de filtration 100 selon l'invention.

La [fig 2] illustre plus particulièrement un exemple de réalisation d'un dispositif de filtration 100 selon l'invention, en coupe axiale partielle selon l'axe longitudinal du dispositif.

Le dispositif de filtration 100 selon l'invention est destiné à filtrer un flux d'air de refroidissement F utilisé pour le refroidissement d'une turbine basse pression, et plus particulièrement pour le refroidissement du rotor de la turbine basse pression.

Le flux d'air de refroidissement F est prélevé au niveau d'une partie amont de la turbine basse pression, par exemple au niveau du compresseur haute pression de la turbomachine, et est acheminé au niveau d'un carter inter turbines, (ou TCF « Turbine Center Frame » selon la terminologie anglo-saxonne généralement utilisée), via une conduite d'alimentation, appelé « tube de servitude 10 », représentée à la [fig 1].

Le tube de servitude 10 comporte une extrémité amont 11 reliée à une partie du compresseur haute pression et configuré pour permettre un prélèvement d'un flux d'air de refroidissement F, et au moins un bras aval avec une extrémité aval 12 de distribution configurée pour être connectée à un trou d'injection du carter inter-turbines (le tube de servitude 10 illustré à titre d'exemple à la [fig 1] comporte deux bras de servitude 18 présentant chacun une extrémité aval 12 de distribution).

Le dispositif de filtration 100 selon l'invention est avantageusement positionné sur ce tube de servitude 10 entre l'extrémité amont 11 et l'extrémité aval 12. Ainsi, le dispositif de filtration 100 est intercalé entre un tube amont 14 et un tube aval 16 du tube de servitude 10.

En référence à la [fig 2], le dispositif de filtration 100 selon l'invention comporte un conduit 110 en forme de spirale ou d'hélice circulaire inscrite sur un cylindre de révolution d'axe de révolution (Ox). Le conduit 110 est formé selon l'exemple de réalisation illustré par un tube à section circulaire.

Le tube en spirale 110 formant le conduit présente une extrémité amont 111 configurée pour être couplée au tube amont 14 du tube de servitude 10 et une extrémité aval 112 configurée pour être couplée au tube aval 16 du tube de servitude 10.

Les extrémités amont 111 et 112 du tube spirale 110 sont solidarisées respectivement aux tubes amont 14 et aval 16 via des moyens de fixation ad hocs, par exemple par un système de brides et de liaisons boulonnées.

Le tube spirale 110 présente une génératrice tracée en forme d'hélice circulaire, ou de vis, autour d'un cylindre de révolution d'axe de révolution Ox. Ainsi, le tube spirale 110 présente une pluralité de boucles s'étendant axialement le long de l'axe de révolution Ox, et présente une forme générale en tire-bouchon.

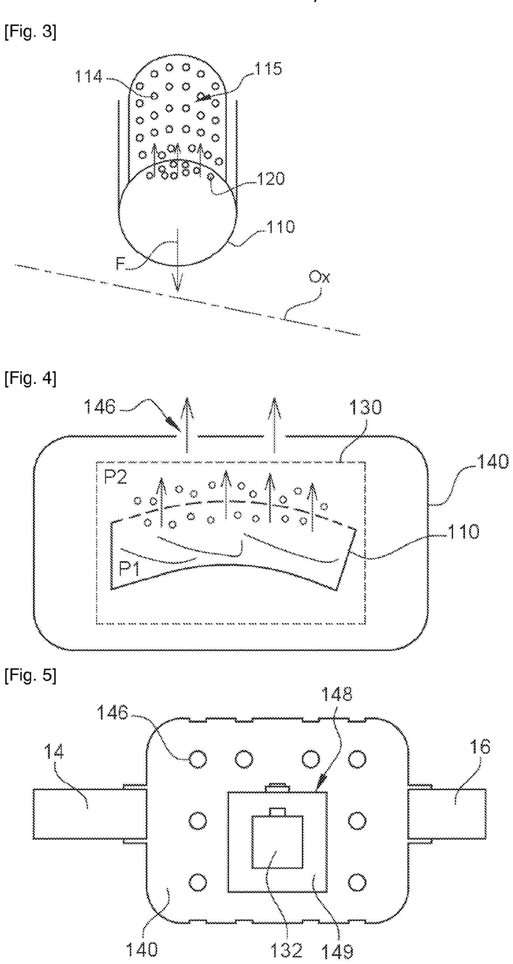

Comme représenté à la [fig 2] et plus particulièrement à la [fig 3] qui illustre particulièrement une tranche transversale du tube spirale 110 du dispositif de filtration 100 selon l'invention, le tube spirale 110 comporte une pluralité d'ouvertures 114 ménagées au niveau d'une portion 115 radialement externe du tube spirale par rapport à un axe de révolution Ox sensiblement parallèle à l'axe longitudinal L.

Avantageusement, les ouvertures 114 sont réalisées sur toute la longueur du tube spirale 110, c'est-à-dire entre l'extrémité amont 111 et l'extrémité aval 112 du tube spirale 110.

Selon une variante de réalisation, il est également envisagé de réaliser des ouvertures 114 sur une ou plusieurs portions réparties sur longueur du tube spirale 110.

Le diamètre des ouvertures 114 est déterminé en fonction de la taille des particules que l'on souhaite filtrer ou extraire du flux d'air F.

A titre d'exemple, pour une filtration de particules de sable ayant un diamètre de 0,01 à 2mm, les ouvertures 114 peuvent présenter un diamètre de 2mm.

Grâce au dispositif de filtration 100 selon l'invention, le flux d'air de refroidissement F circulant à une vitesse V1 et à une pression P1 dans le tube amont 14 du tube de servitude 10 est mis en centrifugation par circulation à l'intérieur du tube spirale 110.

Ainsi, le tube spirale 110 est un élément statique présentant une géométrie permettant une mise en centrifugation d'un flux d'air de refroidissement F.

La centrifugation du flux d'air de refroidissement F permet de séparer les particules de sable 120 du flux d'air par leur différence de densité.

Lors de la circulation à l'intérieur du tube spirale 110, le flux d'air de refroidissement F et les particules de sable 120 sont soumis à une force centrifuge imposée par la forme en hélice du tube spirale 110.

Comme on peut le voir représenté sur la [fig 3], les particules de sable 120 sont ainsi projetées vers une portion 115 du tube spirale 110 radialement externe par rapport à l'axe de révolution Ox et les particules de sable 120 sont expulsées du tube spirale 110 via les ouvertures 114.

Le dispositif de filtration 100 comporte un réservoir de stockage 130 pour réceptionner les particules de sable 120 filtrées du flux d'air de refroidissement F et expulsées du tube spirale 110.

Le réservoir de stockage 130 entoure le tube spirale 110, c'est-à-dire que le tube spirale 110 est logé à l'intérieur du réservoir de stockage 130.

Le réservoir de stockage 130 forme une enceinte dont au moins une paroi extérieure formant l'enveloppe de l'enceinte est poreuse à l'air mais ne permet pas le passage des particules filtrées, et notamment des particules de sable 120 filtrées.

Ainsi, les particules de sable 120 filtrées du flux d'air de refroidissement F s'accumulent dans le fond du réservoir de stockage 130 sous l'effet de la gravité comme illustré à la [fig 2].

Le réservoir de stockage 130 est par exemple une toile poreuse ou encore une enceinte métallique poreuse entourant le tube spirale 110.

En outre, le dispositif de filtration 100 comporte une enceinte protectrice 140 formant l'enveloppe extérieure du dispositif de filtration 100. L'enceinte protectrice 140 est positionnée autour du réservoir de stockage 130 ainsi qu'autour des portions de couplage entre le tube de servitude 10 et le tube spirale 110. A cet effet, l'enceinte protectrice 140 comporte un système fixation amont 141 et un système de fixation aval 142 permettant de fixer l'enceinte protectrice respectivement sur le tube amont 14 et le tube aval 16 du tube de servitude 10.

L'enceinte protectrice 140 a essentiellement un rôle de protection du dispositif 100, et notamment du tube spirale 110, des divers chocs ou agressions extérieures.

Le dispositif de filtration 100 comporte en outre des moyens 144 pour solidariser le réservoir de stockage 130 à l'enceinte protectrice 140. Ainsi, le réservoir de stockage 130 est autoporté et peut être centré à l'intérieur de l'enceinte protectrice 140 comme illustré à la [fig 2].

A titre d'exemple, les moyens 144 pour solidariser le réservoir de stockage 130 à l'enceinte protectrice 140 sont également configurés pour limiter et/ou absorber les mouvements importants, les vibrations, etc du réservoir de stockage 130 à l'intérieur de l'enceinte protectrice 140.

L'enceinte protectrice 140 comporte également des ouvertures 146, notamment pour permettre une communication fluidique, c'est-à-dire un échange d'air, entre l'extérieur et l'intérieur de l'enceinte protectrice 140. Ainsi, comme représenté par le schéma de principe de la [fig 4], on garantit une pression P1 à l'intérieur du tube spirale 110 supérieure à la pression P2 environnante, et donc une expulsion des particules de sable 120 du tube spirale 110.

En effet, dans le cas où l'enceinte protectrice 140 serait fermée et complètement étanche, on assisterait à un placage des particules de sable 120 à l'intérieur du tube spirale 110 et non à une expulsion des particules par la présence d'une pression à l'intérieur de l'enceinte protectrice 140 supérieure à la pression P1 du flux d'air de refroidissement F circulant à l'intérieur du tube spirale 110.

Les dimensions des ouvertures 146 ménagées au niveau de l'enceinte protectrice 140 sont déterminées de manière à garantir une pression P1 à l'intérieur du tube spirale 110 supérieure à la pression P2 à l'intérieur de l'enceinte protectrice 140, tout en minimisant la perte de débit du flux d'air de refroidissement F prélevé au niveau du compartiment compresseur haute pression. Ainsi, on maximise le débit d'air en sortie du dispositif de filtration 100 pour assurer un bon refroidissement en aval du dispositif de filtration 100, et notamment du rotor de turbine basse pression.

A titre d'exemple, les ouvertures 146 sont réparties uniformément sur au moins une portion de la surface de l'enceinte protectrice 140.

En référence à la [fig 5] qui représente une vue extérieure du dispositif de filtration 100, l'enceinte protectrice 140 comporte un accès au réservoir de stockage 130.

Ainsi, comme représenté à titre d'exemple l'enceinte protectrice 140 peut comporter une trappe d'accès 148 munie d'un panneau amovible 149 donnant la possibilité d'accéder au réservoir de stockage 130 lorsque le panneau amovible 149 est en position ouverte et permettant de protéger les éléments à l'intérieur de l'enceinte protectrice 140 lorsque le panneau amovible 149 est en position fermée.

En regard de la trappe d'accès 148 de l'enceinte protectrice 140, le réservoir de stockage 130 comporte également une ouverture 132 ménagée au niveau de son enveloppe extérieure permettant un accès aux particules de sable 120 emmagasinée dans le réservoir de stockage 130, depuis l'extérieur du dispositif de filtration 100. L'ouverture 132 est par exemple une trappe d'accès présentant un panneau amovible entre une position ouverte et une position fermée. L'ouverture 132 du réservoir de stockage est représentée en transparence sur la [fig 5].

Les trappes d'accès 148, 132 sont dimensionnées pour permettre un contrôle visuel du remplissage du réservoir de stockage et/ou pour le passage d'un conduit d'aspiration 151 d'un aspirateur 150. Les trappes d'accès 148, 132 doivent être suffisamment grandes pour pouvoir aspirer toutes les particules présentes dans le réservoir de stockage 130.

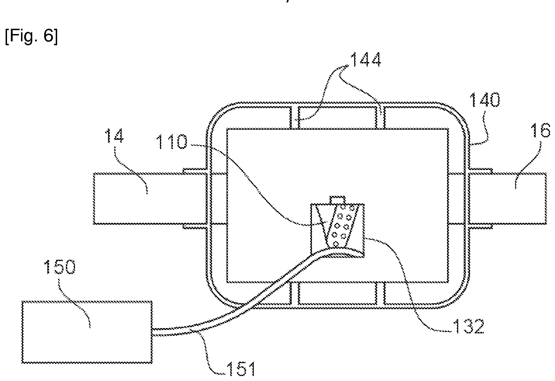

Ainsi, les opérations de maintenance sont facilitées. Compte tenu des accès, il est ainsi possible de vider le réservoir de stockage 130 facilement en utilisant un classique aspirateur 150, comme représenté à la [fig 6]. Le dispositif de filtration 100 selon l'invention permet donc de faciliter l'extraction des particules de sable 120 stockées, lors des opérations de maintenance ou lors des opérations de contrôle moteur.

Le dispositif de filtration 100 peut également comporter un détecteur de remplissage permettant de communiquer le taux de remplissage des particules de sable 120 du réservoir de stockage 130, par exemple par une communication en temps réel du taux de remplissage, ou encore par l'émission d'un signal d'alarme lors du dépassement d'un taux de remplissage seuil.

## Revendications

1. Dispositif de filtration (100) d'un flux d'air de refroidissement (F) pour le refroidissement d'une turbine basse pression d'une turbomachine, **caractérisé en ce qu'**il comporte un conduit (110) présentant une géométrie configurée pour mettre en centrifugation ledit flux d'air de refroidissement (F) traversant ledit conduit (110), ledit conduit (110) présentant des ouvertures (114) dimensionnées pour permettre une séparation des particules solides contenues dans ledit flux d'air de refroidissement (F) mis en centrifugation, **caractérisé en ce que** ledit conduit (110)
présente une forme d'hélice circulaire inscrite sur un cylindre de révolution d'axe de révolution (Ox).

2. Dispositif de filtration (100) d'un flux d'air de refroidissement (F) selon la revendication précédente **caractérisé en ce que** ledit conduit (110) est un tube à section circulaire.

3. Dispositif de filtration (100) d'un flux d'air de refroidissement (F) selon la revendication 2 **caractérisé en ce que** les ouvertures (114) sont ménagées dans une portion radialement externe dudit conduit par rapport au dit axe de révolution (Ox).

4. Dispositif de filtration (100) d'un flux d'air de refroidissement (F) selon l'une des revendications précédentes **caractérisé en ce qu'**il comporte un réservoir de stockage (130) pour le stockage des particules solides séparées dudit flux d'air de refroidissement (F).

5. Dispositif de filtration (100) d'un flux d'air de refroidissement (F) selon la revendication précédente **caractérisé en ce que** ledit réservoir de stockage (130) présente une enveloppe poreuse à l'air.

6. Dispositif de filtration (100) d'un flux d'air de refroidissement (F) selon l'une des revendications précédentes **caractérisé en ce qu'**il comporte une enceinte protectrice (140) formant l'enveloppe extérieure dudit dispositif de filtration (100).

7. Dispositif de filtration (100) d'un flux d'air de refroidissement (F) selon la revendication précédente **caractérisé en ce que** l'enceinte protectrice (140) présente des ouvertures (146) permettant de mettre en communication fluidique l'intérieur de l'enceinte protectrice (140) avec l'extérieur de l'enceinte protectrice (140).

8. Dispositif de filtration (100) d'un flux d'air de refroidissement (F) selon l'une des revendications 6 à 7 **caractérisé en ce que** l'enceinte protectrice (140) présente une trappe d'accès (148) positionnée en regard d'une ouverture (132) ménagée au niveau de l'enveloppe extérieure du réservoir de stockage (130).

9. Système de refroidissement d'une turbine basse pression **caractérisé en ce qu'**il comporte un tube de servitude (10) permettant d'acheminer un flux d'air de refroidissement (F) prélevé au niveau d'un compartiment de compresseur haute pression jusqu'à un compartiment de turbine basse pression, ledit tube de servitude (10) comportant un dispositif de filtration (100) selon l'une des revendications précédentes, ledit dispositif de filtration (100) étant positionné entre un tube amont (14) relié au compartiment de compresseur haute pression et un tube aval (16) relié au compartiment de turbine basse pression.

## Patentansprüche

1. Filtervorrichtung (100) eines Kühlluftstroms (F) für die Kühlung einer Niederdruckturbine einer Turbomaschine, **dadurch gekennzeichnet, dass** sie eine Leitung (110) mit einer Geometrie umfasst, die so ausgelegt ist, dass sie den Kühlluftstrom (F), der die Leitung (110) durchstömt, in Zentrifugation versetzt, wobei die Leitung (110) Öffnungen (114) aufweist, die so bemessen sind, dass sie eine Trennung der in dem in Zentrifugation versetzten Kühlluftstrom enthaltenen Feststoffpartikel ermöglichen, **dadurch gekennzeichnet, dass** die Leitung (110) eine spiralförmige Form hat, die auf einem Rotationszylinder mit der Rotationsachse (Ox) aufgetragen ist.

2. Filtervorrichtung (100) eines Kühlluftstroms (F) nach vorhergehendem Anspruch, **dadurch gekennzeichnet, dass** die Leitung (110) ein Rohr mit einem runden Querschnitt ist.

3. Filtervorrichtung (100) eines Kühlluftstroms (F) nach Anspruch 2, **dadurch gekennzeichnet, dass** die Öffnungen (114) in einem radial extern verlaufenden Abschnitt der Leitung in Bezug auf die Rotationsachse (Ox) angeordnet sind.

4. Filtervorrichtung (100) eines Kühlluftstroms (F) nach einem der vorhergehenden Ansprüche, **dadurch gekennzeichnet, dass** sie einen Lagerbehälter (130) zur Lagerung der vom Kühlluftstrom (F) abgeführten Feststoffpartikel umfasst.

5. Filtervorrichtung (100) eines Kühlluftstroms (F) nach vorhergehendem Anspruch, **dadurch gekennzeichnet, dass** der Lagerbehälter (130) eine luftdurchlässige Hülle aufweist.

6. Filtervorrichtung (100) eines Kühlluftstroms (F) nach einem der vorhergehenden Ansprüche, dadurchgekennzeichnet, dass sie eine Schutzkammer (140) umfasst, die die Außenhülle der Filtervorrichtung (100) bildet.

7. Filtervorrichtung (100) eines Kühlluftstroms (F) nach vorhergehendem Anspruch, **dadurch gekennzeichnet, dass** die Schutzkammer (140) Öffnungen (146) aufweist, die eine Fluidkommunikation zwischen dem Innenraum der Schutzkammer (140) und der Außenseite der Schutzkammer (140) ermöglichen.

8. Filtervorrichtung (100) eines Kühlluftstroms (F) nach einem der Ansprüche 6 bis 7, **dadurch gekennzeichnet, dass** die Schutzkammer (140) eine Zugangsklappe (148) aufweist, die gegenüber einer im Bereich der Außenhülle des Lagerbehälters (130) angebrachten Öffnung (132) positioniert ist.

9. Kühlsystem einer Niederdruckturbine, **dadurch gekennzeichnet, dass** es ein Servicerohr (10) umfasst, das ermöglicht, einen Kühlluftstrom (F), der im Bereich eines Hochdruckkompressorabteils entnommen wird, bis zu einem Niederdruckturbinenabteil zu leiten, wobei das Servicerohr (10) eine Filtervorrichtung (100) nach einem der vorhergehenden Ansprüche umfasst, wobei die Filtervorrichtung (100) zwischen einem vorgelegenen Rohr (14), das mit dem Hochdruckkompressorabteil verbunden ist, und einem nachgelegenen Rohr (16), das mit dem Niederdruckturbinenabteil verbunden ist, positioniert ist.

## Claims

1. A device (100) for filtering a cooling air flow (F) for cooling a low-pressure turbine of a turbomachine, **characterised in that** it includes a duct (110) having a geometry configured to centrifuge said cooling air flow (F) passing through said duct (110), said duct (110) having openings (114) dimensioned to allow separation of the solid particles contained in said cooling air flow (F) being centrifuged, **characterised in that** said duct (110) has a circular helix shape inscribed on a cylinder of revolution with an axis of revolution (Ox).

2. The device (100) for filtering a cooling air flow (F) according to the preceding claim, **characterised in that** said duct (110) is a tube with a circular cross-section.

3. The device (100) for filtering a cooling air flow (F) according to claim 2, **characterised in that** the openings (114) are provided in a radially outer portion of said duct with respect to said axis of revolution (Ox).

4. The device for filtering (100) a cooling air flow (F) according to one of the preceding claims, **characterised in that** it includes a storage tank (130) for storing solid particles separated from said cooling air flow (F).

5. The device (100) for filtering a cooling air flow (F) according to the preceding claim, **characterised in that** said storage tank (130) has an air-porous shell.

6. The device (100) for filtering a cooling air flow (F) according to one of the preceding claims, **characterised in that** it includes a protective enclosure (140) forming the external shell of said filtration device (100).

7. The device (100) for filtering a cooling air flow (F) according to the preceding claim, **characterised in that** the protective enclosure (140) has openings (146) allowing the interior of the protective enclosure (140) to be placed in fluid communication with the exterior of the protective enclosure (140).

8. The device (100) for filtering a cooling air flow (F) according to one of claims 6 to 7, **characterised in that** the protective enclosure (140) has an access hatch (148) positioned facing an opening (132) provided at the external shell of the storage tank (130).

9. A system for cooling a low-pressure turbine, **characterised in that** it includes a utility tube (10) for conveying a cooling air flow (F) taken at a high-pressure compressor compartment to a low-pressure turbine compartment, said utility tube (10) including a filtration device (100) according to one of the preceding claims, said filtration device (100) being positioned between an upstream tube (14) connected to the high-pressure compressor compartment and a downstream tube (16) connected to the low-pressure turbine compartment.
